# EUROPEAN PATENT APPLICATION

(11) **EP 4 745 206 A1**
(43) Date of publication of application: **20.05.2026**
(21) Application number: 25207156.8
(22) Date of filing: 07.10.2025
(51) Int. Cl.: C09D 11/40, D06P 1/38, B41J 2/21, B41J 3/407, B41M 5/00, C09D 11/54, D06P 1/48, D06P 1/50, D06P 1/613, D06P 1/649, D06P 1/673, D06P 3/66, D06P 5/00, D06P 5/20, D06P 5/30

(54) **TREATMENT METHOD FOR INKJET TEXTILE PRINTING AND INKJET TEXTILE PRINTING METHOD**

(30) Priority: 09.10.2024 JP 2024176942
(71) Applicant: KONICA MINOLTA, INC., Tokyo 100-7015 (JP)
(72) Inventor: KUROGI, Yusuke, Tokyo, 100-7015 (JP)
(74) Representative: MFG Patentanwälte Meyer-Wildhagen Meggle-Freund Gerhard PartG mbB

(57) **Abstract**

A treatment method for inkjet textile printing includes applying a treatment liquid (200a) to a textile (100) (S01) when performing printing by applying a recording ink (200b) containing a reactive dye to the textile (100). The textile (100) is a textile on which a water droplet has a diameter of less than 15 mm five seconds after 0.3 g of water is dropped thereto. The treatment liquid (200a) contains urea or ethylene urea. A content of a sizing agent in the treatment liquid (200a) is 1% by mass or less.

## Description

### BACKGROUND OF THE INVENTION

### TECHNICAL FIELD

The present disclosure relates to a treatment method for inkjet textile printing and an inkjet textile printing method.

### DESCRIPTION OF RELATED ART

In inkjet textile printing, if printing is performed on a textile directly, bleeding may occur. Therefore, in general, a pretreatment is performed on a textile for the purpose of preventing bleeding or improving fixability between a color material and the textile (for example, see Japanese Patent No. 4858533, Japanese Patent No. 4710337, Japanese Patent No. 4274011, and Japanese Patent No. 4623258). Conventionally, the pretreatment has been applied to a textile by padding. In the present specification, padding means that a predetermined liquid is applied to a textile by dipping or coating. At the time, a large amount of the liquid is applied to the textile. In addition, after the padding, a process of drying the liquid applied to the textile is performed. As the pretreatment liquid, an aqueous solution containing a sizing agent, an alkaline agent, and the like is used. The sizing agent and the alkaline agent are contained in the aqueous solution for preventing bleeding and improving fixability, respectively. There is also disclosed a method of performing a pretreatment by an inkjet method (for example, see Japanese Unexamined Patent Publication No. 2024-25269).

Some textiles have particularly high water absorbency, and they are also pretreated in the same manner (see, for example, Japanese Unexamined Patent Publication No. 2010-209489 and Japanese Unexamined Patent Publication No. 2007-154017).

### SUMMARY OF THE INVENTION

When the above-described textile having particularly high water absorbency is subjected to a pretreatment by padding, the following problems arise. One is a problem that the textile excellent in water absorbency contains a large amount of a pretreatment liquid, and therefore, a drying load of the textile is large. The other is a problem that a sizing agent contained in the pretreatment liquid remains in the textile even after the textile is washed, thereby reducing the water absorbency of the textile.

The present disclosure has been made in view of the above problems and circumferences. An object of the present disclosure is to provide a treatment method for inkjet textile printing and an inkjet textile printing method that can achieve both suppression of bleeding and suppression of decrease in water absorbency and can suppress dye migration when inkjet textile printing is performed on a textile having a high water absorbency.

In order to solve the above-described problems, the present inventor has conducted intensive studies on the characteristics of a treatment liquid when inkjet textile printing is performed on a textile having a high water absorbency. As a result, the present inventor has found that conditions of a sizing agent contained in a treatment liquid greatly affect the state of an image, such as bleeding due to inkjet textile printing, when inkjet textile printing is performed on a textile having a high water absorbency, and thus has reached the present disclosure. That is, the above object of the present disclosure is solved by the following means.

To achieve at least one of the abovementioned objects, according to an aspect of the present disclosure, a treatment method for inkjet textile printing reflecting one aspect of the present disclosure includes:
applying a treatment liquid to a textile when performing printing by applying a recording ink containing a reactive dye to the textile,
wherein the textile is a textile on which a water droplet has a diameter of less than 15 mm five seconds after 0.3 g of water is dropped thereto,
wherein the treatment liquid contains urea or ethylene urea, and
wherein a content of a sizing agent in the treatment liquid is 1% by mass or less.

### BRIEF DESCRIPTION OF THE DRAWINGS

The advantages and features provided by one or more embodiments of the present disclosure will become more fully understood from the detailed description given hereinafter and the appended drawings which are given by way of illustration only, and thus are not intended as a definition of the limits of the present disclosure, and wherein:
FIG. 1 is a flowchart illustrating an inkjet textile printing method of the present embodiment; and
FIG. 2 is a schematic diagram schematically illustrating an inkjet textile printing apparatus that is used in the inkjet textile printing method of the present embodiment.

### DETAILED DESCRIPTION

Although the realization mechanism or action mechanism of the effects of the present disclosure is not clear, the present inventor infers the mechanism as follows.

It is presumed that when a recording ink is applied to a textile having a high water absorbency, the speed at which the recording ink permeates in the thickness direction of the textile is high, and the extent to which the recording ink spreads over the surface of the textile and bleeds is small. Therefore, in a case where a recording ink is applied to a textile having a high water absorbency, the necessity of containing a sizing agent for suppressing bleeding in a pretreatment liquid is low. It is considered that as the amount of the sizing agent remaining on the textile increases, water absorbency decreases. On the other hand, if the content of the sizing agent in the pretreatment liquid is decreased, the amount of the sizing agent remaining on the textile is also decreased, and thus it is possible to suppress decrease in water absorbency of the textile. Accordingly, it is presumed that, by controlling the content of the sizing agent in the treatment liquid when inkjet textile printing is performed on a textile having a high water absorbency, both suppression of bleeding and suppression of decrease in water absorbency can be achieved.

Then, as the amount of the sizing agent remaining on the textile decreases, the amount of the color material adsorbed by the sizing agent also decreases. Therefore, it is presumed that in a washing step after the recording ink is applied to the textile, dye migration by the color material adsorbed by the sizing agent is suppressed.

Hereinafter, one or more embodiments of the present disclosure will be described with reference to the drawings. However, the scope of the present disclosure is not limited to the disclosed embodiments.

### 1. Treatment Method for Inkjet Textile Printing

In one embodiment of a treatment method for inkjet textile printing of the present disclosure, when printing is performed on a textile by applying a recording ink containing a reactive dye to the textile, a treatment liquid is applied to the textile. The textile is a textile on which a water droplet has a diameter of less than 15 mm five seconds after 0.3 g of water is dropped thereto. The treatment liquid contains urea or ethylene urea, and the content of a sizing agent in the treatment liquid is 1% by mass or less. Since the treatment method for inkjet textile printing of the present embodiment is configured as described above, the following effects are exhibited. That is, when inkjet textile printing is performed on a textile having a high water absorbency, both suppression of bleeding and suppression of decrease in water absorbency can be achieved. In addition, dye migration due to a color material adsorbed by the sizing agent can be suppressed. Note that the treatment method for inkjet textile printing of the present embodiment may be carried out before the recording ink is applied to the textile, or may be carried out after the recording ink is applied to the textile. It is preferable that the recording ink does not contain a sizing agent. The recording ink not containing the sizing agent can suppress decrease in water absorbency of the textile.

In the treatment method for inkjet textile printing of the present embodiment, it is preferable to use an inkjet head to apply the treatment liquid directly to the textile to which the pretreatment liquid has not been applied, without performing the conventional pretreatment by padding. In a case where a textile having a particularly high water absorbency is subjected to the pretreatment by padding, the following problems also arise. That is, it takes time for the pretreatment, and the delivery of products obtained by textile printing may be delayed. In addition, cost for the pretreatment step is required. In addition, the pretreated textile deteriorates with time and may not be stored for a long period of time. On the other hand, by applying the treatment liquid to the textile using the inkjet head, the time for the pretreatment can be shortened, and the delivery date of the products can be advanced. In addition, since the usage amount of the treatment liquid is reduced, the cost for the pretreatment step can be reduced. In addition, since the interval from the application of the treatment liquid to the application of the recording ink is short, it is possible to suppress the deterioration of the pretreated textile over time and to store the pretreated textile for a long period of time.

Furthermore, in the pretreatment by the padding method, the treatment liquid is applied to the entire surface of the textile, so that the amount of the treatment liquid absorbed by a textile is large. In particular, the amount of the treatment liquid absorbed by a textile having an excellent water absorbency is particularly large. Therefore, a drying load in drying the treatment liquid is large. Furthermore, in the washing step which is a posttreatment step of inkjet textile printing, a large amount of a cleaning liquid and a long cleaning time are required for removal of the treatment liquid. In contrast, by applying the treatment liquid to the textile using the inkjet head, it is possible to control the amount of the treatment liquid absorbed by the textile, and it is possible to reduce the drying load. Further, in the above-described washing step, the amount of the cleaning liquid can be reduced, the washing/cleaning time can be shortened, and the washing step can be simplified. In addition, in the padding method, it is possible that application unevenness of the sizing agent occurs, and color blurring occurs in inkjet textile printing. On the other hand, it is possible to suppress such color blurring by applying the treatment liquid to the textile using the inkjet head.

Furthermore, in the pretreatment by the padding method, as described above, the amount of the treatment liquid absorbed by the textile is large, and the drying load is large. On the other hand, in the method of applying the treatment liquid to the textile using the inkjet head, since it is not necessary to dry the treatment liquid or it is sufficient to dry the treatment liquid only a little, it is possible to reduce the drying load. Such a method of applying the treatment liquid to a textile and then applying the recording ink to the textile without drying may be referred to as "Wet on Wet method". This includes a case where after the recording ink is applied to the textile, the treatment liquid is applied to the textile without drying. In the "Wet on Wet method", when the recording ink is applied in a state where the textile is wet, the recording ink easily permeates into the textile, and therefore, there is also an advantage that a white background is hardly seen in a white textile having a large absorption amount.

The viscosity of the treatment liquid is preferably 3.5 mPa·s or more, more preferably from 3.5 to 10.0 mPa·s, and particularly preferably from 3.5 to 8.0 mPa·s. The viscosity of the treatment liquid being 3.5 mPa·s or more provides excellent ejection property when the treatment liquid is ejected from an inkjet head.

Furthermore, when the treatment liquid is applied to a textile using an inkjet head, the ejection amount of the treatment liquid is preferably 30 g/m² or less. The ejection amount of the treatment liquid is more preferably 5 to 20 g/m². When the ejection amount of the treatment liquid is 30 g/m² or less, there is an advantage of suppressing bleeding at the time of landing of the treatment liquid.

Furthermore, the method of ejecting the treatment liquid in the inkjet head used for application of the treatment liquid is not particularly limited. The ejection method can be selected from various methods such as a piezo method, a thermal method, and a continuous method. The piezo method and the continuous method are preferable because they have a high possibility of stably ejecting even a treatment liquid containing a polymer material, and the piezo method is particularly preferable because it is compact and has a high degree of integration.

### <Textile>

In the treatment method for inkjet textile printing of the present embodiment, the textile is a textile on which a water droplet has a diameter of less than 15 mm five seconds after 0.3 g of water is dropped thereto. In the present specification, such a textile may be referred to as a "highly water-absorbent textile". The diameter is preferably equal to or less than 14 mm, and more preferably equal to or less than 5 mm. Since the diameter is less than 15 mm, the textile in the treatment method for inkjet textile printing of the present embodiment has a high water absorbency, and can suppress bleeding when the recording ink is applied. 0.3 g of water is dropped onto the spread textile from a position that is 10 mm high from the textile. The diameter of water when the water is dropped on the textile is a wet-spreading diameter of the water on the textile, and is a value obtained by measuring a portion where the diameter of water is largest in an area of the textile surface wetted by the water. The diameter of the water is an average value of measurement values of ten measurements. As the diameter of water five seconds after 0.3 g of water is dropped to the textile is smaller, the water absorbency of the textile is higher, but about 2 mm is considered to be the lower limit.

The high-absorbent textile preferably has a basis weight of 250 g/m² or more. The basis weight is more preferably 250-450 g/m² and particularly preferably 350-450 g/m². When the basis weight of the highly water-absorbent textile is equal to or greater than 250 g/m², the water absorbency of the textile is further increased, and it is possible to further suppress the bleeding when the recording ink is applied to the textile.

The material of the highly water-absorbent textile is not particularly limited. Examples of the material of the highly water-absorbent textile include cotton, silk, hemp, wool, nylon fiber, rayon fiber, and mixed fabrics thereof. Among these, cotton is preferable. By using cotton as the material, the water absorbency of the textile is further increased, and it is possible to further suppress bleeding when the recording ink is applied to the textile. The highly water-absorbent textile is preferably a textile to which no sizing agent is applied. That is, the treatment liquid and the recording ink are preferably applied to a textile to which no sizing agent is adhered. No sizing agent being adhered to the textile can prevent a decrease in water absorbency of the textile due to the sizing agent.

In addition, the towel cloth may be a "pile cloth" in which pile, which is raised fiber, is not cut, or a "shirring cloth" in which the pile is cut.

### <Treatment Liquid >

### [Humectant]

In the treatment method for inkjet textile printing of the present embodiment, the treatment liquid contains urea or ethylene urea. The treatment liquid containing urea or ethylene urea include the treatment liquid containing both urea and ethylene urea. Urea and ethylene urea are contained in the treatment liquid as humectants. The humectant promotes fixing of a reactive dye to a recording medium by steam in a color developing step by steam treatment after image formation. Thus, the coloring density can be improved. In particular, ethylene urea is preferable in that it is unlikely to be hydrolyzed and is excellent in long-term storage stability in a case where the treatment liquid is alkaline. The content of the humectant in the treatment liquid is preferably 10% by mass or more. Furthermore, the content of the humectant in the treatment liquid is preferably from 10 to 30% by mass, more preferably from 15 to 25% by mass. By the content being within the above range, sufficient dyeability or colorability can be ensured while sufficient ejection property from the inkjet head can be ensured.

Furthermore, when the treatment liquid is ejected using an inkjet head, urea and ethylene urea can improve the ejection property because they moisturize the nozzle surface of the inkjet head.

### [Sizing Agent]

In the treatment method for inkjet textile printing of the present embodiment, the content of the sizing agent in the treatment liquid is 1% by mass or less. The content of the sizing agent in the treatment liquid is preferably 0.5% by mass or less. Furthermore, it is most preferable that the content of the sizing agent in the treatment liquid is 0% by mass, that is, no sizing agent is contained in the treatment liquid. When the content of the sizing agent in the treatment liquid is 1% by mass or less, it is possible to prevent a decrease in water absorbency of the textile due to the sizing agent. Furthermore, in the treatment method for inkjet textile printing of the present embodiment, since the textile is the above-described highly water-absorbent textile, even when the content of the sizing agent in the treatment liquid is 1% by mass or less, bleeding on the textile is suppressed. In the present specification, the sizing agent is a water-soluble polymer the viscosity of which of 1% by mass aqueous solution is 4 to 100 mPa·s at 25°C.

When the treatment liquid contains a sizing agent, the sizing agent contained in the treatment liquid is preferably at least one selected from sodium alginate, carboxymethylcellulose, and starch.

In addition, since the content of the sizing agent contained in the treatment liquid is 1% by mass or less, it is possible to suppress dye migration due to the recording ink adsorbed to the ink.

In addition, when the treatment liquid is ejected from an inkjet head, the content of the sizing agent in the treatment liquid is preferably small. When the sizing agent is contained in the treatment liquid, the nozzle surface of the inkjet head is dried and thickened by the sizing agent, whereby the ejection property is deteriorated. Therefore, since the content of the sizing agent in the treatment liquid is small, the ejection property of the treatment liquid is improved. That is, when the treatment liquid contains the humectant and has a small content of the sizing agent, the ejection property of the treatment liquid when ejected from an inkjet head is improved.

### [Other Components]

The treatment liquid preferably further contains a solvent, a water-soluble polymer, an alkaline agent, a surfactant, a preservative, water, and the like. It is also a preferable aspect that the treatment liquid contains a color ink, and the color ink contains a reactive dye.

### (Solvent)

The solvent contained in the treatment liquid is preferably a general water-soluble organic solvent. Examples of the solvent include alcohols, polyhydric alcohols, glycol ethers, amines, amides, heterocycles, sulfoxides and the like. Furthermore, examples of the alcohols include methanol, ethanol, propanol, isopropanol, butanol, isobutanol, sec-butanol, and t-butanol. Examples of the polyhydric alcohols include ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol. Examples of the glycol ethers include ethylene glycol alkyl ether, diethylene glycol alkyl ether, triethylene glycol alkyl ether, propylene glycol alkyl ether, dipropylene glycol alkyl ether, and tripropylene glycol alkyl ether. Examples of the amines include ethanolamine, diethanolamine, triethanolamine, N-methyldiethanolamine, N-ethyldiethanolamine, morpholine, N-ethylmorpholine, ethylenediamine, diethylene diamine, triethylenetetramine, tetraethylenepentamine, polyethyleneimine, pentamethyldiethylenetriamine, tetramethylpropylenediamine and the like. Examples of the amides include formamide, N,N-dimethylformamide, N,N-dimethylacetamide, and the like. Examples of the heterocycles include 2-pyrrolidone, N-methyl-2-pyrrolidone, cyclohexylpyrrolidone, 2-oxazolidone, 1,3-dimethyl-2-imidazolidinone and the like. Examples of the sulfoxides include dimethyl sulfoxide and the like.

The content of the solvent contained in the treatment liquid is preferably 5 to 40% by mass.

### (Low-viscosity Water-soluble Polymer)

The low-viscosity water-soluble polymer contained in the treatment liquid can adjust the viscosity of the treatment liquid. When the treatment liquid is ejected from an inkjet head, the inclusion of the low-viscosity water-soluble polymer in the treatment liquid can enhance the ejection property of the treatment liquid from the inkjet head. The low-viscosity water-soluble polymer is a water-soluble polymer having a lower viscosity than the sizing agent. In particular, the low-viscosity water-soluble polymer is a water-soluble polymer the viscosity of which of 1% by mass aqueous solution is less than 4 mPa·s at 25°C. In the present disclosure, the term "water-soluble" of the "water-soluble polymer" means that the amount of a target substance dissolved in 100 parts by mass of water at 25°C is 5 parts by mass or more. Because the polymer has water solubility, it can be used in aqueous treatment ink.

Examples of the low-viscosity water-soluble polymer include polyvinylpyrrolidone, polyethylene glycol, an ethylene oxide-propylene oxide copolymer, a polyethylene oxide adduct of glycerin, a polypropylene adduct of glycerin, a polyethylene oxide adduct of diglycerin, and a polypropylene adduct of diglycerin.

The content of the low-viscosity water-soluble polymer in the treatment liquid is preferably 10% by mass or less. The treatment liquid may not contain the low-viscosity water-soluble polymer when there is no needs to adjust the viscosity.

### (Alkaline Agent)

The alkaline agent contained in the treatment liquid can accelerate fixing of the reactive dye contained in the recording ink to the recording medium. Thus, the coloring density of the reactive dye can be improved. Such an alkaline agent is at least one of carbonate and hydrogen carbonate. Each of the carbonate and the hydrogen carbonate is preferably at least one of sodium salt and potassium salt. As the alkaline agent, potassium carbonate or potassium hydrogen carbonate is particularly preferable. These alkaline agents are less likely to be precipitated from the treatment liquid, and therefore, when the treatment liquid is ejected from an inkjet head, the ejection of the treatment liquid from the inkjet head can be stabilized.

The content of the alkaline agent contained in the treatment liquid is preferably 10% by mass or less. The content of the alkaline agent contained in the treatment liquid is more preferably from 3 to 10% by mass, and particularly preferably from 4 to 8% by mass. By the content being within the above range, sufficient dyeability or colorability can be ensured while sufficient ejection property from the inkjet head can be ensured. Furthermore, the treatment liquid is preferably alkaline with a hydrogen ion concentration index (pH) at 25°C of 10 or less due to the inclusion of an alkaline agent. The hydrogen ion concentration index (pH) of the treatment liquid at 25°C is more preferably 9 to 10.

### (Surfactant)

As the surfactant, any of cationic, anionic, amphoteric, and nonionic surfactants can be used.

Examples of the cationic surfactant include aliphatic amine salt, aliphatic quaternary ammonium salt, benzalkonium salt, benzethonium chloride, pyridinium salt, imidazolinium salt, and the like.

Examples of the anionic surfactant include fatty acid soaps, N-acyl-N-methylglycine salts, N-acyl-N-methyl-β-alanine salts, N-acyl glutamates, alkyl ether carboxylates, acylated peptides, alkyl sulfonates, alkylbenzene sulfonates, alkylnaphthalene sulfonates, dialkyl sulfosuccinate salts, alkyl sulfoacetates, α-olefin sulfonates, N-acylmethyltaurine, sulfated oils, higher alcohol sulfate salts, secondary higher alcohol sulfate ester salts, alkyl ether sulfates, secondary higher alcohol ethoxy sulfates, polyoxyethylene alkylphenyl ether sulfates, monoglysulfates, fatty acid alkylolamide sulfate ester salts, alkyl ether phosphate ester salts, alkyl phosphate ester salts and the like.

Examples of the amphoteric surfactant include a carboxybetaine type, a sulfobetaine type, an aminocarboxylic acid salt, and imidazolinium betaine.

Examples of the nonionic surfactant include polyoxyethylene alkyl ether, polyoxyethylene secondary alcohol ether, polyoxyethylene alkylphenyl ether (e.g., EMULGEN 911), polyoxyethylene sterol ether, polyoxyethylene lanolin derivative, polyoxyethylene polyoxypropylene alkyl ether (e.g., NEWPOL PE-62, manufactured by Sanyo Chemical Industries, Ltd), polyoxyethylene glycerin fatty acid ester, polyoxyethylene castor oil, hydrogenated castor oil, polyoxyethylene sorbitan fatty acid ester, polyoxyethylene sorbitol fatty acid ester, polyethylene glycol fatty acid ester, fatty acid monoglyceride, polyglycerol fatty acid ester, sorbitan fatty acid ester, propylene glycol fatty acid ester, sucrose fatty acid ester, fatty acid alkanolamides, polyoxyethylene fatty acid amide, polyoxyethylene alkylamine, alkylamine oxide, ethylene glycol, acetylene alcohol and the like.

In a case of using these surfactants, one type can be used alone, or two or more types can be used in combination. The surfactant is preferably added in an amount of 0.001 to 1.0% by mass to the total mass of the treatment liquid.

### (Preservative)

When the treatment liquid contains a preservative, deterioration during storage is suppressed, and the storage period can be extended. Examples of the preservative include aromatic halogen compounds, methylene dithiocyanate, halogen-containing nitrogen-sulfur compounds, and 1,2-benzisothiazolin-3-one. As the preservative, a commercially available product may be used. Examples of the commercially available preservative include "Preventol^{®} CMK" (aromatic halogen compound, manufactured by Bayer AG). Examples thereof also include "PROXEL^{®} GXL" (1,2-benzisothiazolin-3-one, manufactured by ICI).

### (Water)

As the water, pure water or ultrapure water such as ion-exchanged water, ultrafiltered water, reverse osmosis water, or distilled water can be used. In addition, by using water sterilized by ultraviolet irradiation, hydrogen peroxide, or the like, it is possible to prevent the generation of mold or bacteria in a case where the treatment liquid is stored for a long period of time. The content of water in the treatment liquid is preferably 55% by mass or more and 80% by mass or less. When the content of water in the treatment liquid is within such a range, the solid component can be sufficiently dissolved, and the solubility of the treatment ink can be improved.

Note that the treatment liquid containing each of the above-described materials preferably does not contain a reduction inhibitor (sodium m-nitrobenzenesulfonate). Thus, a reduction inhibitor having low solubility can be prevented from being precipitated to deteriorate the storage stability of the treatment liquid.

### 2. Second Treatment Method for Inkjet Textile Printing

A second aspect of the treatment method for inkjet textile printing of the present disclosure is a treatment method for inkjet textile printing including applying a treatment liquid to a textile when performing printing by applying a recording ink containing a reactive dye to the textile, wherein a first treatment liquid is used as the treatment liquid in a case where the textile is a textile on which a water droplet has a diameter of 7 mm or less five seconds after 0.3 g of water is dropped thereto. In a case where the textile is a textile on which a water droplet has a diameter of 15 mm or more five seconds after 0.3 g of water is dropped thereto, a second treatment liquid having a content of a sizing agent greater than a content thereof in the first treatment liquid is used as the treatment liquid. Thus, by switching the type of treatment liquid to be applied with respect to textiles having different water absorbencies, it is possible to provide a printed product optimal for each textile in terms of bleeding, dye migration, and water absorbency. That is, it is possible to perform the treatment for inkjet textile printing by switching the treatment liquid to the treatment liquid having the content of the sizing agent suitable for a textile while switching textiles having different water absorbencies. Thus, inkjet textile printing that is performed by the second treatment method for inkjet textile printing can perform textile printing suitable for textiles.

In the second treatment method for inkjet textile printing of the present embodiment, the textile on which a water droplet has a diameter of 7 mm or less five seconds after 0.3 g of water is dropped thereto may be referred to as "diameter 7 mm textile". Also, the textile on which a water droplet has a diameter of 15 mm or more five seconds after 0.3 g of water is dropped thereto may be referred to as "diameter 15 mm textile".

As described above, the second treatment method for inkjet textile printing of the present embodiment uses the first treatment liquid in the case where the textile is "diameter 7 mm textile" and uses the second treatment liquid in the case where the textile is "diameter 15 mm textile". The second treatment method for inkjet textile printing of the present embodiment is the same as the treatment method for inkjet textile printing of the above-described embodiment except that the treatment liquid is used by being switched according to the water absorbency of the textile. Further, in a case of the textile on which a water droplet has a diameter of more than 7 mm and less than 15 mm five seconds after 0.3 g of water is dropped thereto, one of the first treatment liquid and the second treatment liquid is preferably used, or they may be used in combination.

In the second treatment method for inkjet textile printing of the present embodiment, the conditions of the first treatment liquid are the same as the conditions of the treatment liquid in the treatment method for inkjet textile printing of the above-described embodiment described above. The conditions of the second treatment liquid are the same as the conditions of the first treatment liquid except that the content of the sizing agent is greater than 1% by mass. The content of the sizing agent in the second treatment liquid is preferably more than 1% by mass, and more preferably more than 1% by mass and 5% by mass or less.

### 3. Treatment Liquid

One embodiment of the treatment liquid of the present disclosure is a treatment liquid for textile printing on a textile on which a water droplet has a diameter of 7 mm or less five seconds after 0.3 g of water is dropped thereto, and is a treatment liquid dedicated to such a textile. The treatment liquid of the present embodiment contains urea or ethylene urea, and the content of the sizing agent contained therein is 1% by mass or less. The conditions of the treatment liquid of the present embodiment are the same as the conditions of the treatment liquid used in the treatment method for inkjet textile printing of the above-described embodiment.

Another aspect of the treatment liquid of the present disclosure is a treatment liquid for textile printing on a textile on which a water droplet has a diameter of 15 mm or more five seconds after 0.3 g of water is dropped thereto, and is a treatment liquid dedicated to such a textile. Another aspect of the treatment liquid of the present disclosure is a treatment liquid that contains urea or ethylene urea and in which the content of a sizing agent exceeds 1% by mass. Other aspects of the treatment liquid of the present disclosure are the same as those of the treatment liquid used in the treatment method for inkjet textile printing of the above-described embodiment, except that the content of the sizing agent exceeds 1% by mass.

### 4. Inkjet Textile Printing Method

In one embodiment of the inkjet textile printing method of the present disclosure, the treatment liquid is applied to the textile by the treatment method for inkjet textile printing of the above-described embodiment, and the recording ink containing the reactive dye is applied to the textile before or after the treatment liquid is applied to the textile. The application of the treatment liquid and the recording ink to the textile is performed by using an inkjet head. Accordingly, when inkjet textile printing is performed on a textile having a high water absorbency, it is possible to achieve both suppression of bleeding and suppression of a decrease in water absorbency, and it is possible to suppress dye migration.

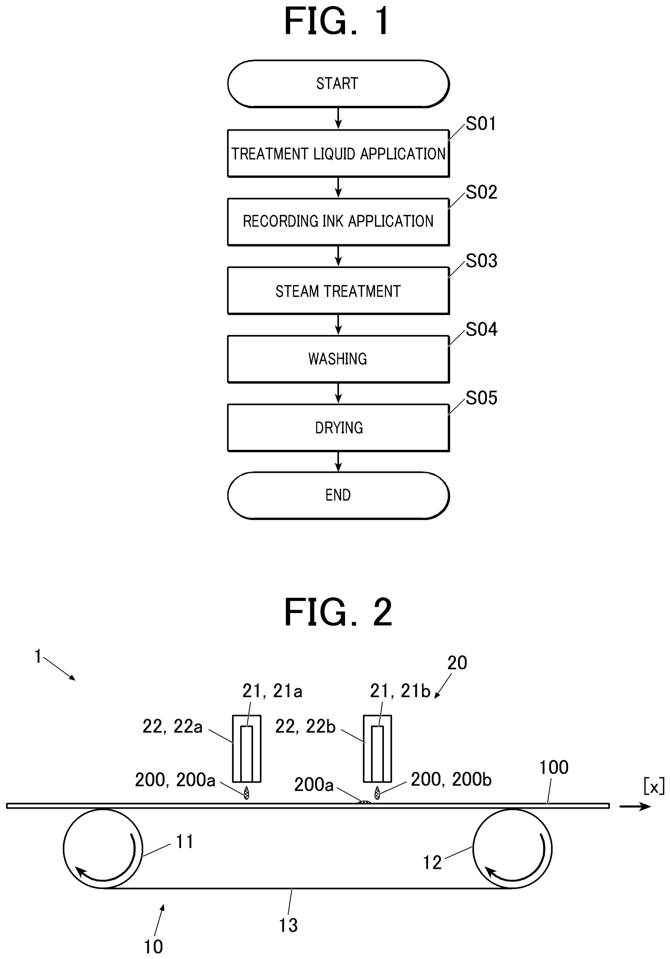

As in the flow shown in FIG. 1, the inkjet textile printing method of the present embodiment has a "treatment liquid application S01" in which the treatment liquid is applied to the textile, a "recording ink application S02" in which the recording ink is applied to the textile, and a "steam treatment S03" in which the textile is treated with steam. The inkjet textile printing method of the present embodiment may further have "washing S04" of washing the textile and "drying S05" of drying the textile. FIG. 1 is the flowchart illustrating the inkjet textile printing method of the present embodiment.

In the inkjet textile printing method of the present embodiment, it is preferable that a sizing agent is not applied to the textile before the treatment liquid and the recording ink are applied to the textile. This makes it possible to suppress a decrease in the water absorbency of the highly water-absorbent textile due to the sizing agent, and to suppress dye migration.

In the inkjet textile printing method of the present embodiment, the treatment liquid and the recording ink are ejected in an arbitrary order, and the ejection amount of the treatment liquid is preferably equal to or less than 30 g/m². The phrase "the treatment liquid and the recording ink are ejected in an arbitrary order" or the like includes both a case where the recording ink is ejected to the textile after the treatment liquid is ejected to the textile and a case where the treatment liquid is ejected to the textile after the recording ink is ejected to the textile, and means that either of the cases is okay. Furthermore, a method in which the treatment liquid and the recording ink are ejected randomly from the respective inkjet heads is also included. In the inkjet textile printing method of the present embodiment, since textile printing is performed on the highly water-absorbent textile, bleeding due to the recording ink is suppressed. Therefore, from the viewpoint of suppressing bleeding, it is not necessary to eject the treatment liquid before ejection of the recording ink. Thus, the treatment liquid may be ejected before the recording ink or after the recording ink, and furthermore, they may be ejected at random.

Hereinafter, the inkjet textile printing method of the present embodiment will be described in more detail with reference to the drawings.

### <Inkjet Textile Printing Apparatus>

FIG. 2 is a schematic diagram schematically illustrating an inkjet textile printing apparatus used in the inkjet textile printing method of the present embodiment. An inkjet textile printing apparatus 1 includes a medium conveyance section 10 of a belt conveyance system and an ink supply section 20 of an inkjet system.

The conveyance section 10 includes a plurality of conveyance rollers 11 and 12 and an endless belt 13 wound around the conveyance rollers 11 and 12. One of the conveyance rollers 11 and 12 is a drive roller for rotating the endless belt 13. The belt 13 has an adhesive outer periphery surface and holds a textile 100, which is a recording medium, on the upper side of the outer periphery surface. Thus, the medium conveyance section 10 is configured to convey the textile 100 held by the belt 13 in the conveyance direction [x], which is the rotation direction of the belt 13.

The ink supply section 20 includes a plurality of inkjet heads 21 that ejects the treatment liquid or a recording ink 200 to the textile 100 held by the medium conveyance section 10. The plurality of inkjet heads 21 includes a first application section (first applicator) for applying the recording ink to the textile 100 and a second application section (second applicator) for applying the treatment liquid to the textile 100. These inkjet heads 21 eject the treatment liquid or the recording ink 200 to the textile 100 from ink ejection openings. Each of the inkjet heads 21 is mounted on a carriage 22 which reciprocates in a conveyance width direction perpendicular to the conveyance direction [x] of the textile 100, and ejects the treatment liquid or the recording ink 200 over the conveyance width direction. Note that the inkjet heads 21 may be mounted on one carriage 22.

The treatment liquid or the recording ink 200 ejected from each inkjet head 21 lands on the textile 100 being conveyed by the medium conveyance section 10. Of these inkjet heads 21, the inkjet head mounted on a first carriage 22a disposed on the most upstream side in the conveyance direction [x] is referred to as a treatment liquid head 21a. The treatment liquid head 21a is filled with a treatment liquid 200a, and ejects the treatment liquid 200a. Of these inkjet heads 21, the inkjet head mounted on a second carriage 22b disposed on the downstream side in the conveyance direction [x] is referred to as a recording inkjet head 21b. The recording ink head 21b is filled with a recording ink 200b and ejects the recording ink 200b. Of these inkjet heads 21, the inkjet head disposed on the most downstream side in the conveyance direction [x] may be used as a post-processing head (not illustrated) that is filled with the treatment liquid 200a as a post-processing ink and ejects the functional ink 200a.

The inkjet textile printing apparatus 1 can eject the recording ink 200b from the recording ink head 21b to the textile 100 to which the treatment liquid 200a has been applied by landing.

Although only one recording ink head 21b is shown in FIG. 2, the recording ink head 21b may be provided for each color of recording ink. The recording ink heads 21b corresponding to the recording inks of the respective colors are preferably mounted on the same carriage 22.

Further, it is preferable that the treatment liquid head 21a can apply a plurality of types of treatment liquid in a switching manner. The treatment liquid head 21a may switch and apply a plurality of types of treatment liquid by replacing the treatment liquid. The treatment liquid head 21a may include a plurality of treatment liquid heads, and the treatment liquid heads may be filled with respective types of treatment liquids to apply the types of treatment liquid in a switching manner. For example, when a first treatment liquid and a second treatment liquid are used as the treatment liquid in a switching manner, a treatment liquid head for the first treatment liquid and a treatment liquid head for the second treatment liquid may be provided. Note that instead of using the treatment liquid head, the treatment liquid may be applied to the textile by dipping or the like, and in that case, treatment liquids may be switched by a treatment liquid application device by dipping or the like, or treatment liquids may be switched by using a plurality of treatment liquid application devices.

In addition, an ink ejection method in the inkjet head 21 is not particularly limited. The ejection method is the same as that described as the ejection method of the treatment liquid in the inkjet head used for applying the treatment liquid.

In addition, although not illustrated, the inkjet textile printing apparatus 1 may be provided with a drying section between the treatment liquid head 21a and the recording ink head 21b. The functional ink 200a landed on the textile 100 can be dried by the drying section before landing of the recording ink 200b. In the inkjet textile printing method of the present embodiment, since a highly absorbent textile is used as the recording medium, bleeding of the recording ink is suppressed, and thus drying after application of the treatment liquid to the textile is not necessary, but the textile may be dried in order to further prevent bleeding. In the drying of the treatment liquid 200a by the drying section, it is preferable to dry and remove moisture and solvents in the treatment liquid 200a applied to the textile 100 as much as possible to the extent that bleeding of the subsequent recording ink 200b can be prevented.

Therefore, the drying section preferably performs drying while setting the surface temperature of the recording medium 100 in the range of 30°C to 80°C suitable for the composition of the treatment liquid 200a. The drying section can be appropriately selected and used from among a dryer using temperature-controllable air or warm air, a dryer using a hot plate, a dryer using visible light or far-infrared light, a dryer using a heat roller, a dryer using a section that emits microwaves, and the like. In addition, in a case where the drying section is provided, it is preferable to provide an exhaust pipe or a fan for removing vapor generated by drying from the inside of the apparatus.

Further, the treatment liquid head 21a and the recording ink head 21b may not be mounted on the carriages 22, but may be arranged over a conveyance widthwise direction perpendicular to the conveyance direction [x] of the treatment liquid 100.

### <Recording Medium>

The recording medium is a textile 100. The textile 100 is a highly water-absorbent textile used in the treatment method for inkjet textile printing of the above-described embodiment.

### <Recording Ink>

In the inkjet textile printing method of the present embodiment, as the recording ink, a general ink of each color containing a reactive dye is used. For example, the recording ink contains a reactive dye, and also contains pure water such as ion-exchanged water, a solvent, a surfactant, an inorganic salt, a preservative, and the like. Among these, as the solvent, the surfactant and the preservative, the same materials as those contained in the treatment liquid in the treatment method for inkjet textile printing of the above-described embodiment can be used.

### [Reactive Dye]

As the reactive dye, a general reactive dye of each color can be used. As the reactive dye, for example, either of an addition reaction type dye and a substitution reaction type dye can be used. As the reactive dye, a reactive dye having a monochlorotriazine group as a reactive group is particularly preferable. Hereinafter, specific compounds of the reactive dye preferably used in the inkjet textile printing method of the present embodiment will be described. The reactive dye is not limited to these exemplified compounds.

Examples of the reactive dye preferably used in the inkjet textile printing method of the present embodiment include C. I. Reactive Yellow 2, 3, 7, 15, 17, 18, 22, 23, 24, 25, 27, 37, 39, 42, 57, 69, 75, 76, 81, 84, 85, 86, 87, 92, 95, 102, 105, 111, 125, 135, 136, 137, 142, 143, 145, 151, 160, 161, 165, 167, 168, 175, 176, C. I. Reactive Orange 1, 4, 5, 7, 11, 12, 13, 15, 16, 20, 30, 35, 56, 64, 67, 69, 70, 72, 74, 82, 84, 86, 87, 91, 92, 93, 95, 107, C. I. Reactive Red 2, 3, 3:1, 5, 8, 11, 21, 22, 23, 24, 24:1, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 226, 228, 235, C. I. Reactive Violet 1, 2, 4, 5, 6, 22, 23, 33, 36, 38, C. I. Reactive Blue 2, 3, 4, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236, C. I. Reactive Green 8, 12, 15, 19, 21, C. I. Reactive Brown 2, 7, 9, 10, 11, 17, 18, 19, 21, 23, 31, 37, 43, 46, and C. I. Reactive Black 5, 8, 13, 14, 31, 34, 39.

The content of the reactive dye in the recording ink is preferably from 0.1 to 20% by mass, more preferably from 0.2 to 13% by mass.

### [Inorganic Salt]

The inorganic salt is added to the recording ink in order to maintain the viscosity of the recording ink and the stability of the reactive dye. Examples of such an inorganic salt include sodium chloride, sodium sulfate, magnesium chloride, and magnesium sulfate. However, the inorganic salt is not limited to these.

### <Inkjet Textile Printing Method>

The inkjet textile printing method according to the embodiment is performed using the inkjet textile printing apparatus 1 described above. In this case, first, the textile 100 which is the recording medium is prepared. The textile 100 is a highly water-absorbent textile. It is preferable that the textile 100 is, for example, a textile from which a residue (sizing agent or the like) of a chemical agent used in a manufacturing process, dirt, and the like are removed in advance by washing. Next, the conveyance rollers 11 and 12 are rotated to move the textile 100 in the conveyance direction [x].

While the textile 100 is moved in the conveyance direction [x], the treatment liquid 200a is ejected from the treatment liquid head 21a of the ink supply section 20 so as to land on the textile 100 (treatment liquid application S01). Thus, on the textile 100, an area to which the treatment liquid 200a has been applied becomes an area pretreated with the treatment liquid 200a. At the time, the application amount of the treatment liquid to the textile 100 is preferably 30 g/m² or less. As a result, bleeding at the time of landing can be suppressed. Thereafter, if necessary, the functional ink 200a landed on the recording medium 100 may be dried. Note that causing the treatment liquid or the recording ink to land on the textile using the inkjet head means applying the treatment liquid or the recording ink to the textile.

On the textile 100, the area pretreated by landing of the treatment liquid 200a is referred to as a pretreated area. Next, the recording ink 200b is ejected from the recording ink head 21b of the ink supply section 20 so as to land on the pretreated area (recording ink application S02). Thus, the reactive dye contained in the recording ink 200b is fixed to the textile 100 to form an image.

Further, after the image formation with the recording ink 200b, the textile 100 is subjected to a steam treatment S03 to promote the fixing of the reactive dye to the textile 100. The step of fixing the reactive dye to the textile by the steam treatment S03 is also referred to as a color developing step. Thereafter, a washing S04 and a drying S05 of the textile 100 to which the reactive dye has been fixed are performed, and the inkjet textile printing method is finished (see FIG. 1).

The washing is a treatment in which the textile is washed with a detergent and then rinsed with water. The detergent is not particularly limited, and any detergent may be used as long as it can wash away deposits on the textile. This may be a conventional detergent for washing.

The drying can be performed by bringing it into contact with a heat roller or placing it in a dryer.

### 5. Inkjet Textile Printing Apparatus

One embodiment of the inkjet textile printing apparatus of the present disclosure is an inkjet textile printing apparatus that is used in inkjet textile printing in which by the treatment method for inkjet textile printing of the above-described embodiment, a treatment liquid is applied to a textile , and a recording ink containing a reactive dye is applied to the textile before or after the treatment liquid is applied to the textile. The inkjet textile printing apparatus of the present embodiment includes a first application section applying a recording ink to a textile, and a second application section applying a treatment liquid to the textile. The conditions of the inkjet textile printing apparatus of the present embodiment are the same as those of the inkjet textile printing apparatus described in the inkjet textile printing method of the above-described embodiment.

### [Examples]

The following Examples are provided to specifically describe the present disclosure, but the present disclosure is not limited to these. In the following Examples, operations are performed at room temperature (25°C) unless otherwise specified.

### 1. Preparation of Treatment Liquid

Each treatment liquid was prepared by the following procedure. The components shown in Tables I to III below were sequentially added to a preparation container, mixed, and sufficiently stirred. The obtained solution was filtered through a filter having a pore size of 1 µm to obtain each treatment liquid (Examples 1 to 11 and Comparative Examples 1 to 4).

Details of each component are shown below.
(Solvent)
   Glycerin
   Ethylene glycol
(Low-viscosity Water-soluble Polymer)
   PEG2000: Polyethylene glycol (molecular weight 2000), PEG #2000 (trade name), manufactured by NOF CORPORATION
   PEG6000: Polyethylene glycol (molecular weight 6000), PEG #6000 (trade name), manufactured by NOF CORPORATIONPEG11000: Polyethylene glycol (molecular weight 11000), PEG#11000 (trade name), manufactured by manufactured by NOF CORPORATION
(Alkaline Agent)
   Potassium hydrogen carbonate: Potassium bicarbonate (trade name), manufactured by Takasugi Pharmaceutical Co., Ltd.
   Potassium carbonate: Potassium carbonate (trade name), manufactured by Takasugi Pharmaceutical Co., Ltd.
(Humectant)
   Urea: Urea (trade name), manufactured by Takasugi Pharmaceutical Co., Ltd.
   Ethylene urea: Ethylene urea (trade name), manufactured by Kanto Kagaku
(Sizing Agent)
   Carboxymethylcellulose: CMC Daicel 1130, manufactured by Daicel Miraizu Ltd.
   Sodium alginate: Algitex LL manufactured by KIMICA Corporation
(Surfactant)
   OLFINE^{®} E1010: Acetylene glycol-based surfactant, manufactured by Nissin Chemical Industry Co., Ltd.
(Preservative)
   PROXEL^{®} GXL: 20% propylene glycol aqueous solution of 1,2-benzisothiazolin-3-one, manufactured by Lonza Japan Ltd.

The viscosity was measured at a temperature of 25°C using an E-type viscometer "TV-25" (manufactured by TOKI SANGYO Co., Ltd.).

Tables I to III show the configuration of each treatment liquid, the type of textile, the basis weight of textile, and the diameter and viscosity of water droplets. In each of the treatment liquids, the unit for the numerical value of each component is "% by mass".

### [Table I]

**TABLE I**

| | | **EXAMPLE 1** | **EXAMPLE 2** | **EXAMPLE 3** | **EXAMPLE 4** | **EXAMPLE 5** |
|---|---|---|---|---|---|---|
| **TREATMENT LIQUID** | | **1** | **2** | **3** | **4** | **5** |
| **SOLVENT** | **GLYCERIN** | **5** | **5** | **5** | **5** | **5** |
| | **ETHYLENE GLYCOL** | **5** | **5** | **5** | **5** | **5** |
| **LOW-VISCOSITY WATER-SOLUBLE POLYMER** | **PEG2000** | **-** | **-** | **-** | **-** | **-** |
| | **PEG6000** | **-** | **-** | **-** | **2** | **5** |
| | **PEG11000** | **-** | **-** | **-** | **-** | **-** |
| **ALKALINE AGENT** | **POTASSIUM HYDROGEN CARBONATE** | **10** | **10** | **10** | **10** | **10** |
| | **POTASSIUM CARBONATE** | **-** | **-** | **-** | **-** | **-** |
| **HUMECTANT** | **UREA** | **-** | **-** | **-** | **-** | **-** |
| | **ETHYLENE UREA** | **15** | **15** | **15** | **15** | **15** |
| **SIZING AGENT** | **CARBOXYMETHYLCELLULOSE** | **-** | **0.5** | **-** | **-** | **-** |
| | **SODIUM ALGINATE** | **-** | **-** | **-** | **-** | **-** |
| **SURFACTANT** | **OLFINE E1010** | **0.1** | **0.1** | **0.1** | **0.1** | **0.1** |
| **PRESERVATIVE** | **PROXEL GXL** | **0.1** | **0.1** | **0.1** | **0.1** | **0.1** |
| **ION-EXCHANGED WATER** | | **64.8** | **64.3** | **64.8** | **62.8** | **59.8** |
| **TOTAL** | | **100** | **100** | **100** | **100** | **100** |
| **TEXTILE** | | **COTTON TOWEL** | **COTTON TOWEL** | **COTTON TOWEL** | **COTTON TOWEL** | **COTTON TOWEL** |
| **BASIS WEIGHT [g/m²]** | | **200** | **200** | **400** | **400** | **400** |
| **DIAMETER OF WATER DROPLET [mm]** | | **14** | **14** | **5** | **5** | **5** |
| **VISCOSITY [mPa·s]** | | **2** | **3** | **2** | **3** | **5** |

### [Table II]

**TABLE II**

| | | **EXAMPLE 6** | **EXAMPLE 7** | **EXAMPLE 8** | **EXAMPLE 9** | **EXAMPLE 10** |
|---|---|---|---|---|---|---|
| **TREATMENT LIQUID** | | **6** | **7** | **8** | **9** | **10** |
| **SOLVENT** | **GLYCERIN** | **5** | **5** | **5** | **5** | **5** |
| | **ETHYLENE GLYCOL** | **5** | **5** | **5** | **5** | **5** |
| **LOW-VISCOSITY VATER-SOLUBLE POLYMER** | **PEG2000** | **-** | **-** | **-** | **-** | **10** |
| | **PEG6000** | **5** | **5** | **5** | **-** | **-** |
| | **PEG11000** | **-** | **-** | **-** | **-** | **-** |
| **ALKALINE AGENT** | **POTASSIUM HYDROGEN CARBONATE** | **10** | **-** | **5** | **10** | **10** |
| | **POTASSIUM CARBONATE** | **-** | **10** | **5** | **-** | **-** |
| **HUMECTANT** | **UREA** | **15** | **-** | **-** | **-** | **-** |
| | **ETHYLENE UREA** | **-** | **15** | **15** | **15** | **15** |
| **SIZING AGENT** | **CARBOXYMETHYLCELLULOSE** | **-** | **-** | **-** | **-** | **-** |
| | **SODIUM ALGINATE** | **-** | **-** | **-** | **0.8** | **-** |
| **SURFACTANT** | **OLFINE E1010** | **0.1** | **0.1** | **0.1** | **0.1** | **0.1** |
| **PRESERVATIVE** | **PROXEL GXL** | **0.1** | **0.1** | **0.1** | **0.1** | **0.1** |
| **ION-EXCHANGED WATER** | | **59.8** | **59.8** | **59.8** | **64** | **54.8** |
| **TOTAL** | | **100** | **100** | **100** | **100** | **100** |
| **TEXTILE** | | **COTTON TOWEL** | **COTTON TOWEL** | **COTTON TOWEL** | **COTTON TOWEL** | **COTTON TOWEL** |
| **BASIS WEIGHT [g/m²]** | | **400** | **400** | **400** | **400** | **400** |
| **DIAMETER OF WATER DROPLET [mm]** | | **5** | **5** | **5** | **5** | **5** |
| **VISCOSITY [mPa·s]** | | **5** | **5** | **5** | **5** | **6** |

### [Table III]

**TABLE III**

| | | **EXAMPLE 11** | **COMPARATIVE EXAMPLE 1** | **COMPARATIVE EXAMPLE 2** | **COMPARATIVE EXAMPLE 3** | **COMPARATIVE EXAMPLE 4** |
|---|---|---|---|---|---|---|
| **TREATMENT LIQUID** | | **11** | **12** | **13** | **14** | **15** |
| **SOLVENT** | **GLYCERIN** | **5** | **5** | **5** | **5** | **5** |
| | **ETHYLENE GLYCOL** | **5** | **5** | **5** | **5** | **5** |
| **LOW-VISCOSITY VATER-SOLUBLE POLYMER** | **PEG2000** | **-** | **-** | **-** | **-** | **-** |
| | **PEG6000** | **-** | **5** | **5** | **5** | **5** |
| | **PEG11000** | **3** | **-** | **-** | **-** | **-** |
| **ALKALINE AGENT** | **POTASSIUM HYDROGEN CARBONATE** | **10** | **10** | **10** | **10** | **10** |
| | **POTASSIUM CARBONATE** | **-** | **-** | **-** | **-** | **-** |
| **HUMECTANT** | **UREA** | **-** | **-** | **-** | **-** | **-** |
| | **ETHYLENE UREA** | **15** | **15** | **15** | **15** | **15** |
| **SIZING AGENT** | ***1** | **-** | **1.2** | **-** | **-** | **-** |
| | **SODIUM ALGINATE** | **-** | **-** | **-** | **-** | **-** |
| **SURFACTANT** | **OLFINE E1010** | **0.1** | **0.1** | **0.1** | **0.1** | **0.1** |
| **PRESERVATIVE** | **PROXEL GXL** | **0.1** | **0.1** | **0.1** | **0.1** | **0.1** |
| **ION-EXCHANGED WATER** | | **61.8** | **58.6** | **59.8** | **59.8** | **59.8** |
| **TOTAL** | | **100** | **100** | **100** | **100** | **100** |
| **TEXTILE** | | **COTTON TOWEL** | **COTTON TOWEL** | **COTTON BROADCLOTH** | **LINEN** | **RAYON** |
| **BASIS WEIGHT [g/m²]** | | **400** | **400** | **120** | **180** | **120** |
| **DIAMETER OF WATER DROPLET [mm]** | | **5** | **5** | **16** | **15** | **20** |
| **VISCOSITY [mPa·s]** | | **8** | **9** | **5** | **5** | **5** |

| | | | | | | |
|---|---|---|---|---|---|---|
| ***1: CARBOXYMETHYLCELLULOSE** | | | | | | |

### 2. Preparation of Recording Ink (Black Ink)

The following components shown in Table IV were sequentially added to the preparation container, and ion-exchanged water was further added and mixed so that the total became 100% by mass, and then sufficiently stirred. The obtained solution was filtered through a 1 µm (pore size) filter to obtain black ink. In Table IV, the unit for the numerical value of each component is "% by mass".

### [Table IV]

**TABLE IV**

| **BLACK INK** | | |
|---|---|---|
| **SOLVENT** | **ETHYLENE GLYCOL** | **20** |
| **SOLVENT** | **GLYCERIN** | **10** |
| **DYE** | **Reactive Black 5** | **20** |
| **SURFACTANT B** | **OLFINE E1010 (MANUFACTURED BY NISSIN CHEMICAL INDUSTRY CO.,LTD.)** | **0.06** |
| **PRESERVATIVE** | **PROXEL GXL (MANUFACTURED BY LONZA JAPAN LTD.)** | **0.2** |
| **WATER** | **ION-EXCHANGED WATER** | **REMAINDER** |
| **TOTAL** | | **100** |

| | |
|---|---|
| Ethylene glycol | 20.00% by mass |
| Glycerin | 10.00% by mass |
| Reactive Black 5 (Reactive Black 5) | 20.00% by mass |
| "OLFINE^{®} E1010" (acetylene glycol-based surfactant, manufactured by Nissin Chemical Industry Co., Ltd.) | 0.06% by mass |
| "Proxel^{®} GXL" (20% dipropylene glycol aqueous solution of 1,2-benzisothiazolin-3-one, manufactured by Lonza Japan Ltd.) | 0.20% by mass |

Table V shows whether each obtained treatment liquid satisfies the necessary conditions or the preferable conditions in the present disclosure with respect to the water absorbency, the amount of the sizing agent, the basis weight, the low-viscosity polymer, and the viscosity. The low-viscosity polymer is a low-viscosity water-soluble polymer. Regarding the water absorbency, the case where the water droplet had a diameter (average value of ten times) of less than 15 mm five minutes after 0.3 g of water was dropped to the textile was evaluated as A, and the case where it had a diameter of 15 mm or more was evaluated as B. Regarding the amount of the sizing agent, the case where the content of the sizing agent in the treatment liquid was 1% by mass or less was evaluated as A, and the case where the content thereof was more than 1% by mass was evaluated as B. Regarding the basis weight, the case where the basis weight of the textile was 250 g or more was revaluated as A, and the case where it was less than 250 g was evaluated as B. Regarding the low-viscosity polymer, the case where the treatment liquid contained the low-viscosity water-soluble polymer was evaluated as A, and the case where the treatment liquid did not contain the low-viscosity water-soluble polymer was evaluated as B. Regarding the viscosity, the case where the viscosity of the treatment liquid was 3. 5 mPa·s or more was evaluated as A, and the case where it was less than 3.5 mPa·s was evaluated as B.

### [Table V]

**TABLE V**

| **TREATMENT LIQUID** | | **WATER ABSORBENCY** | **AMOUNT OF SIZING AGENT** | **BASIS WEIGHT** | **LOW-VISCOSITY POLYMER** | **VISCOSITY** |
|---|---|---|---|---|---|---|
| **1** | **EXAMPLE** | **A** | **A** | **B** | **B** | **B** |
| **2** | | **A** | **A** | **B** | **B** | **B** |
| **3** | | **A** | **A** | **A** | **B** | **B** |
| **4** | | **A** | **A** | **A** | **A** | **B** |
| **5** | | **A** | **A** | **A** | **A** | **A** |
| **6** | | **A** | **A** | **A** | **A** | **A** |
| **7** | | **A** | **A** | **A** | **A** | **A** |
| **8** | | **A** | **A** | **A** | **A** | **A** |
| **9** | | **A** | **A** | **A** | **B** | **A** |
| **10** | | **A** | **A** | **A** | **A** | **A** |
| **11** | | **A** | **A** | **A** | **A** | **A** |
| **12** | **COMPARATIVE EXAMPLE** | **A** | **B** | **A** | **A** | **A** |
| **13** | | **B** | **A** | **B** | **A** | **A** |
| **14** | | **B** | **A** | **B** | **A** | **A** |
| **15** | | **B** | **A** | **B** | **A** | **A** |

### 3. Inkjet Textile Printing

Each of samples (Examples 1 to 11 and Comparative Examples 1 to 4) was produced by inkjet textile printing on a textile, which is a recording medium, using the inkjet textile printing apparatus illustrated in FIG. 2.

In the inkjet textile printing apparatus illustrated in FIG. 2, a first carriage 22a located on the upstream side and a second carriage 22b located on the downstream side were installed. The first carriage 22a was equipped with two piezoelectric inkjet heads "KM1024iSAE" (manufactured by Konica Minolta, Inc) (the second one is not illustrated). The inkjet heads were loaded with each treatment liquid obtained as described above. The second carriage 22b was equipped with two piezoelectric inkjet heads "KM1024iSAE" (manufactured by Konica Minolta, Inc) (the second one is not illustrated). The inkjet heads were loaded with the black ink obtained as described above.

The textile was conveyed by the conveyance rollers 11 and 12 in the conveyance direction [x] illustrated in FIG. 2.

First, a total of 15 mL/m² of the treatment liquid was uniformly applied to the entire surface of the conveyed textile from the two heads of the first carriage 22a. Next, the black ink was applied to the textile from the two heads of the second carriage 22b to form a solid image.

The textile was steam-treated at 103°C for 12 minutes to develop color and then washed with water. Thereafter, the textile was cleaned and washed with water at 90°C, and dried to obtain a sample.

### (Example 12)

A treatment liquid was prepared in the same manner as in Comparative Example 1. Then, inkjet textile printing was performed in the same manner as in Comparative Example 1 except that the textile was cotton broadcloth as in Comparative Example 2. The inkjet textile printing method of Example 12 was such that the content of the sizing agent in the treatment liquid was 1.2% by mass and the diameter of the water droplet(s) on the textile was 16 mm. In the inkjet textile printing method of Example 12, after the end of the inkjet textile printing of Example 1, the treatment liquid filled in the two heads in the first carriage 22a were replaced with the treatment liquid of Comparative Example 1, and the textile was switched to cotton broadcloth to apply the treatment liquid to the textile. The sample obtained by the inkjet textile printing method of Example 12 was evaluated for bleeding, dye migration, and water absorbency as described below, and as a result, there was no problem in practical use.

### 4. Evaluation

### (1) Determination of Water Absorbency of Cloth (Unprinted Textile)

It was determined from wet-spread when a single water droplet was dropped from a dropper onto white cloth. A is a pass and C is a fail.
A: Diameter of water droplet of less than 15 mm
C: Diameter of water droplet of 15 mm or more

### (2) Bleeding

The boundary portion between the printed area and the white background portion of the obtained sample was observed by a handy type image quality analysis apparatus Piasil (manufactured by Qea Co., Ltd), and the bleeding width was measured. A and B are each a pass, and C is a fail. A is the best evaluation result.
A: Bleeding width of less than 1 mm
B: Bleeding width of 1 mm or more and less than 2 mm
C: Bleeding width of 2 mm or more

### (3) Dye Migration

The obtained sample was evaluated about contamination (dye migration) to the white background by a test method in accordance with ISO 105 C06. A is a pass, and C is a fail.
A: Grade 3 or higher
C: Lower than grade 3

### (4) Water Absorbency

The water absorbency of the obtained sample (textile after textile printing) was evaluated by a test method in accordance with the precipitation method of JIS L 1907. A and B are each a pass, and C is a fail. A is the best evaluation result.
A: Less than 1 second before precipitation
B: 1 second or more and less than 10 seconds before precipitation
C: 10 seconds or more before precipitation

The evaluation results are shown in Table VI.

### [Table VI]

**TABLE VI**

| | **WATER ABSORBENCY OF CLOTH** | **BLEEDING** | **DYE MIGRATION** | **WATER ABSORBENCY** | **REMARKS** |
|---|---|---|---|---|---|
| **TREATMENT LIQUID 1** | **A** | **B** | **A** | **A** | **EXAMPLE 1** |
| **TREATMENT LIQUID 2** | **A** | **A** | **A** | **B** | **EXAMPLE 2** |
| **TREATMENT LIQUID 3** | **A** | **A** | **A** | **A** | **EXAMPLE 3** |
| **TREATMENT LIQUID 4** | **A** | **A** | **A** | **A** | **EXAMPLE 4** |
| **TREATMENT LIQUID 5** | **A** | **A** | **A** | **A** | **EXAMPLE 5** |
| **TREATMENT LIQUID 6** | **A** | **A** | **A** | **A** | **EXAMPLE 6** |
| **TREATMENT LIQUID 7** | **A** | **A** | **A** | **A** | **EXAMPLE 7** |
| **TREATMENT LIQUID 8** | **A** | **A** | **A** | **A** | **EXAMPLE 8** |
| **TREATMENT LIQUID 9** | **A** | **A** | **A** | **B** | **EXAMPLE 9** |
| **TREATMENT LIQUID 10** | **A** | **A** | **A** | **A** | **EXAMPLE 10** |
| **TREATMENT LIQUID 11** | **A** | **A** | **A** | **A** | **EXAMPLE 11** |
| **TREATMENT LIQUID 12** | **A** | **A** | **C** | **C** | **COMPARATIVE EXAMPLE 1** |
| **TREATMENT LIQUID 13** | **C** | **C** | **A** | **B** | **COMPARATIVE EXAMPLE 2** |
| **TREATMENT LIQUID 14** | **C** | **C** | **A** | **B** | **COMPARATIVE EXAMPLE 3** |
| **TREATMENT LIQUID 15** | **C** | **C** | **A** | **C** | **COMPARATIVE EXAMPLE 4** |

From Examples and Comparative Examples, it is found that in the treatment method for inkjet textile printing of the present disclosure, if the diameter of water droplets is less than 15 mm when they are dropped on a textile, regarding the textile after inkjet textile printing, occurrence of bleeding is suppressed and the water absorbency is excellent.

Further, from Comparative Example 1, it is found that if the content of the sizing agent in the treatment liquid exceeds 1% by mass, dye migration occurs and the water absorbency of the textile decreases.

Although embodiments of the present disclosure have been described and illustrated in detail, the disclosed embodiments are made for purposes of illustration and example only and not limitation. The scope of the present disclosure should be interpreted by terms of the appended claims.

## Claims

1. A treatment method for inkjet textile printing comprising:
applying a treatment liquid (200a) to a textile (100) (S01) when performing printing by applying a recording ink (200b) containing a reactive dye to the textile (100),
wherein the textile (100) is a textile on which a water droplet has a diameter of less than 15 mm five seconds after 0.3 g of water is dropped thereto,
wherein the treatment liquid (200a) contains urea or ethylene urea, and
wherein a content of a sizing agent in the treatment liquid (200a) is 1% by mass or less.

2. The treatment method for inkjet textile printing according to claim 1, wherein the textile (100) has a basis weight of 250 g/m² or more.

3. The treatment method for inkjet textile printing according to claim 1,
wherein the treatment liquid (200a) contains the sizing agent, and
wherein the sizing agent is at least one selected from sodium alginate, carboxymethylcellulose, and starch.

4. The treatment method for inkjet textile printing according to claim 1, wherein the treatment liquid (200a) contains a low-viscosity water-soluble polymer.

5. The treatment method for inkjet textile printing according to claim 4, wherein the low-viscosity water-soluble polymer is polyethylene glycol.

6. The treatment method for inkjet textile printing according to claim 1, wherein the treatment liquid (200a) contains an alkaline agent.

7. The treatment method for inkjet textile printing according to claim 6, wherein the alkaline agent is potassium carbonate or potassium hydrogen carbonate.

8. The treatment method for inkjet textile printing according to claim 1, wherein the content of the sizing agent in the treatment liquid (200a) is 0% by mass.

9. The treatment method for inkjet textile printing according to claim 1, wherein the treatment liquid (200a) has a viscosity of 3.5 mPa·s or more.

10. The treatment method for inkjet textile printing according to claim 1, wherein the recording ink (200b) contains no sizing agent.

11. The treatment method for inkjet textile printing according to claim 1, wherein the treatment liquid (200a) is applied to the textile (100) using an inkjet head (21).

12. An inkjet textile printing method comprising:
applying the treatment liquid (200a) to the textile (100) (S01) by the treatment method for inkjet textile printing according to any one of claims 1 to 11; and
before or after applying the treatment liquid (200a) to the textile (100) (S01), applying the recording ink (200b) containing the reactive dye to the textile (100) (S02),
wherein the treatment liquid (200a) and the recording ink (200b) are applied to the textile (100) using an or the inkjet head (21).

13. The inkjet textile printing method according to claim 12, wherein no sizing agent is applied to the textile (100) before the treatment liquid (200a) and the recording ink (200b) are applied to the textile (100).

14. The inkjet textile printing method according to claim 12, wherein the treatment liquid (200a) and the recording ink (200b) are ejected in an arbitrary order, and an ejection amount of the treatment liquid (200a) is 30 g/m² or less.

15. A treatment method for inkjet textile printing comprising:
applying a treatment liquid (200a) to a textile (100) (S01) when performing printing by applying a recording ink (200b) containing a reactive dye to the textile (100),
wherein a first treatment liquid is used as the treatment liquid (200a) in a case where the textile (100) is a textile on which a water droplet has a diameter of 0.7 mm or less five seconds after 0.3 g of water is dropped thereto, and a second treatment liquid having a content of a sizing agent greater than a content thereof in the first treatment liquid is used as the treatment liquid (200a) in a case where the textile (100) is a textile on which a water droplet has a diameter of 15 mm or more five seconds after 0.3 g of water is dropped thereto.

16. The treatment method for inkjet textile printing according to claim 15,
wherein the content of the sizing agent in the first treatment liquid is 1% by mass or less, and
wherein the content of the sizing agent in the second treatment liquid is more than 1% by mass.

17. A treatment liquid (200a) for performing textile printing on a textile (100) on which a water droplet has a diameter of 7 mm or less five seconds after 0.3 g of water is dropped thereto, the treatment liquid (200a) comprising urea or ethylene urea,
wherein a content of a sizing agent in the treatment liquid (200a) is 1% by mass or less.

18. An inkjet textile printing apparatus (1) that is used in inkjet textile printing of applying the treatment liquid (200a) to the textile (100) by the treatment method for inkjet textile printing according to claim 1, and before or after applying the treatment liquid (200a) to the textile (100), applying the recording ink (200b) containing the reactive dye to the textile (100), the inkjet textile printing apparatus (1) comprising:
a first applicator (21b) that applies the recording ink (200b) to the textile (100); and
a second applicator (21a) that applies the treatment liquid (200a) to the textile (100).
